# EUROPEAN PATENT SPECIFICATION

(11) **EP 2 039 930 B1**
(45) Date of publication and mention of the grant of the patent: **09.11.2016**
(21) Application number: 07253766.5
(22) Date of filing: 24.09.2007
(51) Int. Cl.: F03G 1/00, F03G 7/08

(54) **Spring device with capability of intermittent random energy accumulator and kinetics release trigger**
Federvorrichtung mit intermittierendem Zufallsenergieakkumulator und Kinetikauslöser
Dispositif de ressort doté de la capacité d'accumulation d'énergie aléatoire intermittente et de déclenchement de libération cinétique

(43) Date of publication of application: 25.03.2009
(73) Proprietor: Yang, Tai-Her, Si-Hu Town, Dzan-Hwa (TW)
(72) Inventor: Yang, Tai-Her, Si-Hu Town, Dzan-Hwa (TW)
(74) Representative: Wright, Howard Hugh Burnby

(56) References cited:
- WO-A-01/42648
- WO-A-2004/015790
- FR-A- 2 872 868
- US-A- 3 812 933

## Description

### BACKGROUND OF THE INVENTION

### (a) Field of the Invention

The present invention is related to a spring device for accumulating random kinetics in the spring to release higher power output or to drive a load at higher rpm, and more particularly to a device that gradually restoring non-continuous kinetics, kinetics at lower rpm, or instable random kinetics through a transmission to accumulate kinetics by winding the spring, and to drive the release controller while the accumulator rises to a preset value to trigger the spring to release kinetics for driving a load until the release of the kinetics reaches a periodically balanced status with the load side.

### (b) Description of the Prior Art:

Conventional driving approach by manual cranking, pulling or winding such as a hand cranking or pedal generator; or a device driven by wind such as a micro wind generator or pump; or a device generating power by random kinetics; or a device generating power by vibration; or a device driven by a rotor or a motive block such as one produced by SEIKO in which the random kinetics from the rotor charges an electric storage device directly through a generator driven by an acceleration gear, with the electric energy supplied from the electric storage device to drive the dynamo-electric power system of the movement of a quartz wristwatch. However, such configurations were found with defectives including intermittent discontinuous random kinetics from the rotor or slow speed or weak kinetics from the rotor will slower the rpm of the generator driven even though acceleration gear is provided, which result in lower voltage output of the generator, even lower than the voltage of the electric storage device, and failure to fully charge the unsaturated rechargeable electric storage device. This state results in waste of the random kinetic energy from the rotor. In addition, when non-uniform speed drives to generate energy, the voltage generated from non-uniform speed at a lower speed stage is lower than the voltage of the electric storage device, which also causes the failure of the electric storage device to fully charge and store energy and become waste of the kinetic energy.

Known spring devices are described in FR 2 872 868, WO 2004/015790 and WO 01/42648.

### SUMMARY OF THE INVENTION

The aim of the invention is to provide a spring device that is adapted as an intermittent energy accumulator and an energy release trigger to reduce the waste of random kinetic energy. The spring device gradually winds up by manual or other random intermittent kinetic energy for energy accumulation to a preset value to drive an energy release control device for the spring device to release the energy to further drive a load.

The present invention provides a spring device comprising: a kinetic energy input mechanism for inputting kinetic energy; an output transmission for driving a load; a spring for accumulating kinetic energy input by the input mechanism; an energy release control clutch device for releasing accumulated kinetic energy from the spring to the load once the accumulated kinetic energy reaches a predetermined value; and a one-way transmission positioned between the input mechanism and the spring.

### BRIEF DESCRIPTION OF THE DRAWINGS

Fig. 1 is the first schematic diagram showing a configuration of the present invention.
Fig. 2 is the second schematic diagram showing another configuration of the present invention.
Fig. 3 is the third schematic diagram showing another configuration of the resent invention.
Fig. 4 is the forth schematic diagram showing another configuration of the present invention.
Fig. 5 is a schematic diagram showing operation relation between spring accumulation value and deceleration ratio of the present invention.
   101: input mechanism
   102: energy accumulation transmission device
   102':output transmission
   103: spring
   104: energy release control clutch device
   105: load
   106: static part of the casing
   107: one-way transmission

### DETAILED DESCRIPTION OF THE PREFERRED EMBODIMENTS

Conventional manual drive, or random discontinuous drive, or drive at low rpm, or drive with unstable random kinetics usually insufficient to drive a load effectively. Taking a manually driven generator for example, it generates pulse output voltage due to instable speed or the output voltage is insufficient at lower rpm since it is difficult for the manual drive to drive at uniform speed. Similar defect is found with a pedal generator. When randomly driven by an unbalanced rotor or motive block, the rpm also appears lower or instable; and similar defect occurs when the load is driven by wind or tidal energy. If driven by any of these forms of kinetics, the generated voltage from the generator often gets too low for meaningful use due to lower rpm or lower generated voltage at lower speed under the non-union motion and result in the waste of energy. For example, if the generator operates for charging purpose and its output voltage is lower than that of a rechargeable energy storage device (ESD), or when operates for driving an energy driven light emitting device (LED), and the output voltage is insufficient to reach that enables LED, i.e., to reach the level of working voltage of the LED; or when operates for driving a mechanical displacement device, and the force created by energy fails to overcome the static friction in the mechanism; energy is wasted in nothing since the weaker random kinetics input would become ineffective power.

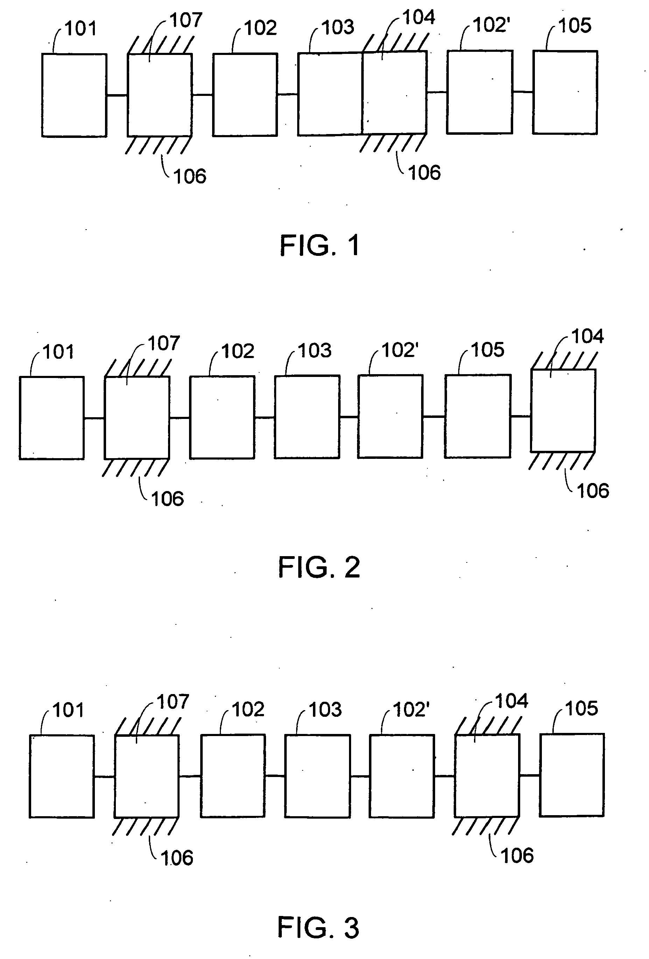

The spring device adapted as intermittent energy accumulator and energy release trigger of the present invention relates to one that is driven by a transmission to accumulate kinetics from those discontinuous, slower rpm or instable random kinetics, and is triggered off to release the accumulated kinetics through a release control device once the accumulation of the spring device mounts up to a preset output value to release greater power output or higher rpm in driving a load. Fig. 1 is a schematic diagram showing a configuration of the present invention. The present invention is essentially comprised of:
--- an input mechanism 101: including a rolling shaft, a roller wheel, or a handle or any other that permits rotational drive, reciprocal pull, swing, or vibration subject to be driven by manual, mechanical, electromagnetic, electric motor force or random kinetics, or subject to one way or two-way drive by natural force to produce one-way displacement drive kinetics;
--- an energy accumulation transmission device 102: is related to an optional item installed by requirement or not, which includes various types of devices of acceleration, deceleration, uniform speed, changing motion for circulation or linear transmission, e.g., a transmission gear set or gear system or linkages, for transmission of mechanical kinetics from the input mechanism 101 to drive a spring 103 to be described below;
--- the output transmission 102': related to a rotational or linear transmission of acceleration, deceleration, equal speed, or variable motion forms, e.g., various types of transmission gear sets, or chain system or linkage for transmitting the mechanical drive kinetics inputted to the spring 103 to further drive the load 105; the output transmission 102 is an optional item that may be or may not be provided depending on requirement;
--- the spring 103: a spring device to accumulate mechanic energy from the input mechanism 101 includes vortex, spiral, sheet, or any other form of spring device that allows accumulation of mechanical energy;
--- an energy release control clutch device 104: comprised of a mechanical clutch with its torque limit actuation function that may be fixed, preset or adjustable, or of a friction clutch provided with a static friction value greater than a dynamic friction, or of a clutch with limited torque value controlled by electro-magnetic or fluid force;
   further, the energy release control clutch device 104 comprises a motive part as a functional structure for storing and releasing energy and a static part as a structure for interacting with the structure of motive part; a casing can be optionally provided for the static part to jointly constitute the static part 106 of the casing to facilitate fixation.

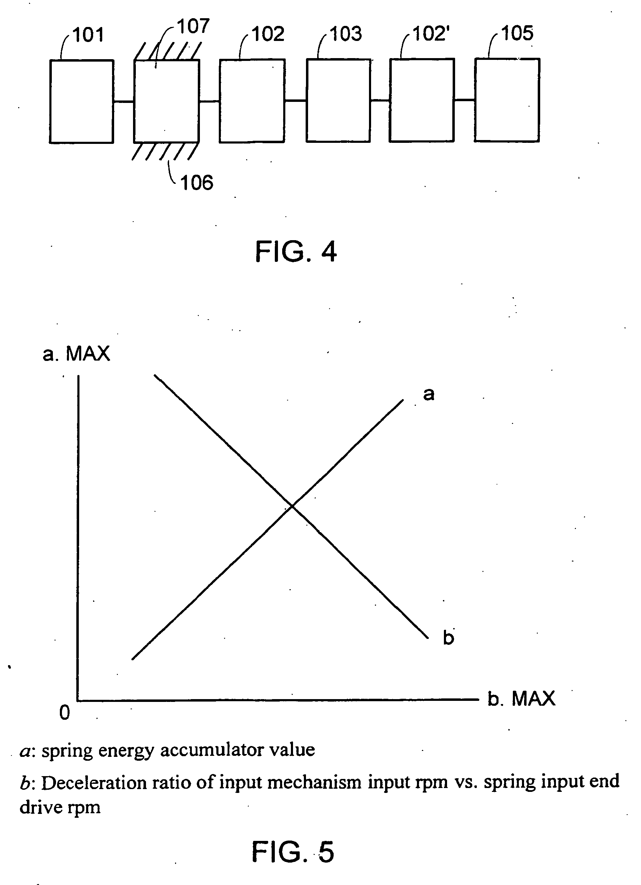

The energy release control clutch device 104 may be provided in any of the following methods as applicable:
(1) One of both interaction ends of the energy release control clutch device 104 is linked to the output end of the spring 103 and coupled to the input end of a load 105 through the output transmission 102' and the other is connected to a static part 106 of the casing, when the elasticity from the spring 103 is subject to reaches its critical value, the energy release control clutch device 104 is released to output the energy accumulated by the spring 103 through the output transmission 102' to drive a load 105 and the energy release control clutch device 104 is closed again when the spring 103 stops outputting as illustrated in Fig. 1 for a schematic diagram showing a configuration of the present invention; or
(2) Both interaction ends of the energy release control clutch 104 device are connected between the motive part of the load 105 and the static part 106 of the casing; when the elastic force from the spring 103 is subject to reaches its critical value, the energy release control clutch device 104 is released to output the accumulated energy from the spring 103 to drive the load 105 and the energy release control clutch device 104 is closed again while the spring 103 stops outputting as illustrated in Fig. 2 for a schematic diagram showing another configuration of the present invention; or,
(3) One end of both interaction ends of the energy release control clutch device 104 is coupled to a coupling structure of the motive part of the load 105 and further to the spring 103 through the output transmission 102'; and the other end is disposed to the static part 106 of the casing; when the elastic force from the spring 103 is subject to reaches its critical value, the energy release control clutch device 104 is released to output the accumulated energy from the spring 103 to drive the load 105 and the energy release control clutch device 104 is closed again when the spring 103 stops outputting as illustrated in Fig. 3 for a schematic diagram showing another configuration of the present invention; or,
(4) The load 105 given with different value between static friction and dynamic friction functions as a damper; the input end of the spring 103 is coupled to the output end of the accumulation transmission 102 to accumulate energy from the input mechanism 101; the output end of the spring 103 drives the load 105; the load 105 has a greater static friction than the dynamic friction to provide similar function of energy release control clutch device 104, thus the energy release control clutch device 104 may not be used; when the accumulated torque at the spring 103 reaches the critical value of the static friction, the load 105 turns from static friction status to dynamic friction status for driving; the spring 103 release kinetics to drive the load 105 until the kinetics of the spring 103 is balanced with the dynamic friction value of the load to return the load to static friction status as illustrated in Fig. 4 for a schematic diagram showing another configuration of the present invention
   --- the load 105: related to any rotational or linear load driven by the spring 103, and more particularly, to one for directly driving a pump or driving a pump through an acceleration or deceleration output transmission 102' so to further pumping the working liquid, or driving a fan, or driving other mechanical load; by directly driving a generator, or driving a generator through the acceleration or deceleration output transmission 102'; the electric energy from the generator in turn directly outputs to drive a load, or charges a rechargeable device; and the electric energy from the rechargeable device is supplied to a wristwatch or a pocket watch to drive a quartz movement or any other movement driven by electric energy, or the electric energy is supplied to a load including a portable communication, video, information AV recorder/player, camera, camera/video recorder, or light emitting device;
   --- a one-way transmission 107: related to ratchet gear and ratchet wheel structure to engage in one-way drive, or any other one-way transmission; disposed at where between the input end of the spring 103 and the static part 106 of the casing; the input end of the spring 103 relates to any rotational mechanical part disposed between the input mechanism 101 through the accumulation transmission 102 and the input end of the spring 103.

In the spring system adapted as intermittent energy accumulator and energy release trigger of the present invention, if the accumulation transmission 102 is provided with irreversible transmission or an irreversible transmission such as irreversible transmission worm and worm gear set is provided, the one-way transmission 107 otherwise disposed at where between the input end of the spring 103 and the static part 106 of the casing may be omitted.

To increase the accumulation efficiency, the accumulation transmission 102 may be comprised of one with its speed variable depending on the value of the torque so that when the accumulation level is lower of the spring 103, the accumulation transmission 102 winds up the spring 103 with smaller torque and faster speed from the input mechanism 101, and later winds up the spring 103 at greater torque and slower speed from the input mechanism 101 when the speed variable ratio changes as the accumulation of the spring 103 increases.

Fig. 5 is a schematic diagram showing operation relation between accumulation value and deceleration ratio of the present invention. Wherein, a relates to the accumulation value of the spring 103; and b, the deceleration ratio between the input rpm from the input mechanism 101 and the drive rpm at the input end of the spring 103. The transmission with its speed variable depending on the value of the torque may be of continuous variable transmission, or step variable transmission, the operation methods include manual or automatic speed variation ratio of the conventional speed variable device.

The present invention of a spring device adapted as accumulator and energy release trigger by driving a spring device to gradually wind up from manually driven or other intermittent kinetics, and driving an energy release controller to trigger off the spring to release energy for driving a load once the accumulation in the spring reaches a preset value for effectively accumulate discontinuous kinetics, kinetics at lower rpm, or instable random kinetics to drive the energy release control when the accumulation reaches the preset value to trigger off the spring to release energy for providing higher power and rpm output is innovative with precise functions.

In addition, the spring device adapted as intermittent energy accumulator and energy release trigger of present invention when applied may be further characterized in that an optional deceleration type of inputted energy storage transmission 102 is disposed to help inputting that even minimum kinetics are capable of driving the spring 103 to mount up for accumulation purpose; or an optional acceleration type of output transmission 102' is disposed to accelerate the rpm of the generator, or the pump, or the fan, or other mechanical load in the course of output operation; or an optional deceleration type of output transmission 102' is provided to generate output with larger torque and slower rpm to drive a load. Therefore, this patent application is duly filed.

## Claims

1. A spring device including an intermittent accumulator and kinetics release trigger that gradually winds up to accumulate energy, comprising: a kinetic energy input mechanism (101) for inputting kinetic energy; **characterised in that** the device further comprises:
an output transmission (102') for driving a load (105); a spring (103) for accumulating kinetic energy input by the input mechanism; an energy release control clutch device (104) for releasing accumulated kinetic energy from the spring to the load once the accumulated kinetic energy reaches a predetermined value; and a one-way transmission (107) positioned between the input mechanism and the spring.

2. A spring device as claimed in claim 1, further comprising an energy accumulation transmission device (102) for transmitting kinetic energy from the input mechanism (101) to the spring (103).

3. A spring device as claimed in claim 2, wherein the energy accumulation transmission device (102) is a device for providing acceleration, deceleration, uniform speed, or changing motion for circulation or linear transmission.

4. A spring device as claimed in claim 3, wherein the transmission device (102) is a transmission gear set or gear system or linkages, for transmission of kinetic energy from the input mechanism (101) to drive the spring (103).

5. A spring device as claimed in any one of claims 1 to 4, wherein the input mechanism 101 includes a rolling shaft, a roller wheel, or a handle or any other device that permits rotational drive, reciprocal drive, swing, or vibration subject to drive by manual, mechanical, electromagnetic, electric motor force or a random kinetic energy source, or subject to a one-way or two-way drive by natural force to produce one-way displacement drive kinetic energy.

6. A spring device as claimed in any one of claims 1 to 5, wherein the output transmission (102') is a rotational or linear transmission for acceleration, deceleration, equal speed, or variable motion.

7. A spring device as claimed in claim 6, wherein the output transmission (102') is a transmission gear set, a chain system or linkage for transmitting the kinetic energy inputted to the spring (103) to drive a load (105).

8. A spring device as claimed in any one of claims 1 to 7, wherein the spring (103) is such as to accumulate kinetic energy from the input mechanism (101) and includes a vortex, spiral, sheet, or any other form of spring device that allows accumulation of kinetic energy.

9. A spring device as claimed in any one of claims 1 to 8, wherein the energy release control clutch device (104) is a mechanical clutch whose torque limit actuation function is fixed, preset or adjustable; or a friction clutch provided with a static friction value greater than a dynamic friction value, or a clutch with limited torque value controlled by electro-magnetic or fluid force.

10. A spring device as claimed in any one of claims 1 to 8, wherein the energy release control clutch device (104) is a motive part forming a functional structure for storing and releasing energy, and a static part (106) forming a structure for interacting with the structure of motive part.

11. A spring device as claimed in claim 10, further comprising a casing for the static part to facilitate fixation.

12. A spring device as claimed in any one of claims 1 to 11, wherein
the load (105) is a rotational or linear load driven by the spring (103), and in particular one for directly driving a pump, or for driving a pump via the output transmission (102'), thereby to pump a working liquid, drive a fan, or drive another mechanical load; or by directly driving a generator, or driving a generator via the output transmission (102'); or using the electric energy from the generator to directly drive a load, or charges a rechargeable device, in which case the electric energy from the rechargeable device is supplied to a wristwatch or a pocket watch to drive a quartz movement or any other movement driven by electric energy, or the electric energy is supplied to a load including a portable communications device, video, information AV recorder/player, camera, camera/video recorder, or light emitting device.

13. A spring device as claimed in claim 10, wherein the one-way transmission (107) is a ratchet gear and ratchet wheel structure to engage in one-way drive, or any other one-way transmission; and is disposed between the input end of the spring (103) and the static part (106) of the casing; the input end of the spring being any circulating mechanical part disposed between the input mechanism (101) via the accumulation transmission device (102), and the input end of the spring (103)..

14. A spring device as claimed in claim 10, wherein the energy release control clutch device (104) is installed so that one of its interaction ends is linked to the output end of the spring (103) and coupled to the input end of the load (105) through the output transmission (102') and the other end is connected to the static part (106) of the casing; whereby, when the resilient force from the spring reaches a critical value, the energy release control clutch device is released by the output transmission (102') to output the energy accumulated by the spring to drive the load, and the energy release control clutch device is closed again when the spring stops outputting.

15. A spring device as claimed in claim 10, wherein the energy release control clutch device (104) is installed so that both interaction ends are disposed between the load (105) and the static part (106) of the casing; whereby, when the resilient force of the spring (103) reaches its critical value, the energy release control clutch device is released to output the accumulated energy for the spring to drive the load, and the energy release control clutch device is closed again when the spring stops outputting.

16. A spring device as claimed in claim 10, wherein the energy release control clutch device (104) is installed so that one interaction end of the clutch device is coupled to a coupling structure of the motive part of the load (105) and further to the spring (103) through the output transmission (102') and the other end is associated with the static part (106) of the casing; whereby, when the resilient force from the spring (103) reaches its critical value, the energy release control clutch device is released to output the accumulated energy from the spring to drive the load, and the clutch is closed again when the spring stops outputting.

17. A spring device as claimed in claim 2, wherein the energy release control clutch device (104) is installed in following approach so that the load (105) having different static friction values, and dynamic friction functions as a damper; the input end of the spring (103) is coupled to the output end of the accumulation transmission (102) to accumulate energy from the input mechanism (101); the output end of the spring drives the load (105); the load has a greater static friction than dynamic friction to provide as similar function as the energy release control clutch device (104), whereby the energy release control clutch may not be used; whereby when the accumulated torque at the spring (103) reaches a critical value of static friction, the load turns from static friction status to dynamic friction status to provide drive; the spring release kinetic energy to drive the load until the kinetic energy of the spring is balanced with the dynamic friction value of the load to return the load to static friction status.

18. A spring device as claimed in any one of claims 1 to 17, wherein if the accumulation transmission (102) is provided with irreversible transmission such as an irreversible transmission worm and a worm gear set is provided, the one-way transmission (107) otherwise disposed between the input end of the spring (103) and the static part (106) of the casing may be omitted.

19. A spring device as claimed in any one of claims 1 to 18, wherein the accumulation transmission (102) is comprised of one having a variable speed depending on the value of the torque so that, when the accumulation level is lower than the spring (103), the accumulation transmission winds up the spring with smaller torque and faster speed from the input mechanism (101), and later winds up the spring at greater torque and slower speed from the input mechanism when the speed variable ratio changes as the accumulation of the spring increases.

20. A spring device as claimed in any one of claims 1 to 19, further comprising a deceleration type of input energy storage transmission (102) disposed to assist input of small amounts of kinetic energy that are capable of driving the spring (103) by accumulation.

21. A spring device as claimed in claim 12, further comprising an acceleration type of output transmission (102') disposed to accelerate the rpm of the generator, the pump, the fan, or other load in the course of output operation.

22. A spring device as claimed in any one of claims 1 to 19, further comprising a deceleration type of output transmission (102') provided to generate output with large torque and slow rpm to drive a load.

23. A spring device as claimed in claim 12, further comprising a deceleration type of input energy storage transmission (102) and a acceleration type of output transmission (102') for assisting inputting small amounts of kinetic energy that are capable of driving the spring (103) by accumulation and for accelerating the rpm of the generator, the pump, the fan, or other load in the course of output operation respectively.

24. A spring device as claimed in any one of claims 1 to 19, further comprising a deceleration type of input energy storage transmission (102) and an acceleration type of output transmission (102') assisting inputting small amounts of kinetic energy for driving the spring (103) by accumulation and for generating output with larger torque and slower rpm to drive a load respectively.

## Patentansprüche

1. Federvorrichtung, die einen intermittierenden Akkumulator und Kintetikauslöser beinhaltet, der schrittweise aufgezogen wird, um Energie zu akkumulieren, umfassend: einen kinetischen Energiezufuhrmechanismus (101) zum Zuführen von kinetischer Energie; **dadurch gekennzeichnet, dass** die Vorrichtung ferner Folgendes umfasst:
eine Abgabeübersetzung (102') zum Antreiben eines Verbrauchers (105); eine Feder (103) zum Akkumulieren kinetischer Energie, die durch den Zufuhrmechanismus zugeführt wird; eine Energiefreisetzungssteuerkupplungsvorrichtung (104) zum Freisetzen akkumulierte kinetischer Energie von der Feder an den Verbraucher, sobald die akkumulierte kinetische Energie einen vorgegebenen Wert erreicht hat; und eine Einwegübersetzung (107), die zwischen dem Zufuhrmechanismus und der Feder positioniert ist.

2. Federvorrichtung nach Anspruch 1, ferner umfassend eine Energieakkumulationsübersetzungsvorrichtung (102) zum Übersetzen kinetischer Energie vom Zufuhrmechanismus (101) zu der Feder (103).

3. Federvorrichtung nach Anspruch 2, wobei die Energieakkumulationsübersetzungsvorrichtung (102) eine Vorrichtung zum Bereitstellen von Beschleunigung, Verlangsamung, gleichbleibender Geschwindigkeit oder Ändern der Bewegung zur Zirkulation oder linearen Übersetzung ist.

4. Federvorrichtung nach Anspruch 3, wobei die Übersetzungsvorrichtung (102) ein Übersetzungszahnradsatz oder ein Zahnradsystem oder Verbindungen ist, um kinetische Energie vom Zufuhrmechanismus (101) zu übersetzen, um die Feder (103) anzutreiben.

5. Federvorrichtung nach einem der Ansprüche 1 bis 4, wobei der Zufuhrmechanismus (101) eine Rollenwelle, eine Laufrolle oder einen Griff oder jede beliebige andere Vorrichtung beinhaltet, die Rotationsantrieb, gegenseitigen Antrieb, Schwenken oder Vibration ermöglicht, die durch manuelle, mechanische, elektromagnetische, elektrische Motorkraft oder eine Zufallskinetikenergiequelle angetrieben wird oder die durch einen Einweg- oder Zweiwegeantrieb durch natürliche Kraft angetrieben wird, um kinetische Einwegverschiebungsantriebsenergie zu erzeugen.

6. Federvorrichtung nach einem der Ansprüche 1 bis 5, wobei die Ausgabeübersetzung (102') eine rotierende oder lineare Übersetzung für Beschleunigung, Verlangsamung, gleichbleibende Geschwindigkeit oder variable Bewegung ist.

7. Federvorrichtung nach Anspruch 6, wobei die Ausgabeübersetzung (102') ein Übersetzungszahnradsatz, ein Kettensystem oder eine Verbindung zum Übersetzen der kinetischen Energie, die durch die Feder (103) zugeführt wird, ist, um einen Verbraucher (105) anzutreiben.

8. Federvorrichtung nach einem der Ansprüche 1 bis 7, wobei die Feder (103) ausgeführt ist, um kinetische Energie vom Zufuhrmechanismus (101) zu sammeln und einen Vortex, eine Spirale, ein Blech oder eine beliebige andere Form von Federvorrichtung beinhaltet, die die Akkumulation von kinetischer Energie ermöglicht.

9. Federvorrichtung nach einem der Ansprüche 1 bis 8, wobei die Energiefreisetzungssteuerkupplungsvorrichtung (104) eine mechanische Kupplung ist, dessen Drehmomentbegrenzungsfunktion fest, vorgegeben oder anpassbar ist; oder eine Rutschkupplung ist, die mit einem statischen Reibungswert bereitgestellt ist, der größer ist als ein dynamischer Reibungswert, oder eine Kupplung mit einem begrenzten Drehmomentwert, der durch elektromagnetische oder Fluid-Kraft gesteuert wird.

10. Federvorrichtung nach einem der Ansprüche 1 bis 8, wobei die Energiefreisetzungssteuerkupplungsvorrichtung (104) ein bewegliches Bauteil, das eine funktionale Struktur zum Speichern und Freisetzen von Energie bildet, und ein statisches Bauteil (106), das eine Struktur zum Interagieren mit der Struktur des beweglichen Bauteils bildet, ist.

11. Federvorrichtung nach Anspruch 10, ferner umfassend ein Gehäuse für das statische Bauteil, um Fixierung zu ermöglichen.

12. Federvorrichtung nach einem der Ansprüche 1 bis 11, wobei der Verbraucher (105) ein rotierender oder linearer Verbraucher ist, der durch die Feder (103) angetrieben wird, und insbesondere zum direkten Antreiben einer Pumpe oder zum Antreiben einer Pumpe über die Ausgabeübersetzung (102'), um dadurch eine Arbeitsflüssigkeit zu pumpen, einen Ventilator anzutreiben oder einen anderen mechanischen Verbraucher anzutreiben; oder durch direktes Antreiben eines Generators oder Antreiben eines Generators über die Ausgabeübersetzung (102'); oder unter Verwendung der elektrischen Energie vom Generator, um einen Verbraucher direkt anzutreiben oder eine aufladbare Vorrichtung aufzuladen, wobei die elektrische Energie von der aufladbaren Vorrichtung in diesem Fall an eine Armbanduhr oder eine Taschenuhr bereitgestellt wird, um ein Quarzuhrwerk oder ein beliebiges anderes Uhrwerk, das durch elektrische Energie betrieben wird, anzutreiben, oder wobei die elektrische Energie an einen Verbraucher bereitgestellt wird, einschließlich eine tragbare Kommunikationsvorrichtung, einen Video, Informations-AV-Recorder/Player, eine Kamera, einen Kamera/Video-Recorder oder eine lichtemittierende Vorrichtung.

13. Federvorrichtung nach Anspruch 10, wobei die Einwegübersetzung (107) ein Ratschenzahnrad und eine Ratschenradstruktur ist, um als Einwegantrieb zu fungieren, oder eine beliebige andere Einwegübersetzung; und zwischen dem Zufuhrende der Feder (103) und dem statischen Bauteil (106) des Gehäuses angeordnet ist; wobei das Zufuhrende der Feder jedes beliebige umlaufende mechanische Bauteil ist, das über die Akkumulationsübersetzungsvorrichtung (102) zwischen dem Zufuhrmechanismus (101) und dem Zufuhrende der Feder (103) angeordnet ist.

14. Federvorrichtung nach Anspruch 10, wobei die Energiefreisetzungssteuerkupplungsvorrichtung (104) derart installiert ist, dass eins ihrer Interaktionsenden über die Ausgabeübersetzung (102') mit dem Ausgabeende der Feder (103) verknüpft und mit dem Zufuhrende des Verbrauchers (105) gekoppelt ist und das andere Ende mit dem statischen Bauteil (106) des Gehäuses verbunden ist; wobei, wenn die rückfedernde Kraft von der Feder einen kritischen Wert erreicht, die Energiefreisetzungssteuerkupplungsvorrichtung durch die Ausgabeübersetzung (102') gelöst wird, um die durch die Feder akkumulierte Energie abzugeben, um den Verbraucher anzutreiben, und die Energiefreisetzungssteuerkupplungsvorrichtung wieder geschlossen wird, wenn die Feder nicht mehr abgibt.

15. Federvorrichtung nach Anspruch 10, wobei die Energiefreisetzungssteuerkupplungsvorrichtung (104) derart installiert ist, dass beide Interaktionsenden zwischen der Verbraucher (105) und dem statischen Bauteil (106) des Gehäuses angeordnet sind; wobei, wenn die rückfedernde Kraft von der Feder (103) ihren kritischen Wert erreicht, die Energiefreisetzungssteuerkupplungsvorrichtung gelöst wird, um die akkumulierte Energie abzugeben, damit die Feder den Verbraucher antreibt, und die Energiefreisetzungssteuerkupplungsvorrichtung wieder geschlossen wird, wenn die Feder nicht mehr abgibt.

16. Federvorrichtung nach Anspruch 10, wobei die Energiefreisetzungssteuerkupplungsvorrichtung (104) derart installiert ist, dass ein Interaktionsende der Kupplungsvorrichtung mit einer Verbindungsstruktur des beweglichen Bauteils des Verbrauchers (105) und ferner durch die Ausgabeübersetzung (102') mit der Feder (103) gekoppelt ist und das andere Ende mit dem statischen Bauteil (106) des Gehäuses verknüpft ist; wobei, wenn die rückfedernde Kraft von der Feder (103) ihren kritischen Wert erreicht, die Energiefreisetzungssteuerkupplungsvorrichtung gelöst wird, um die von der Feder akkumulierte Energie abzugeben, um den Verbraucher anzutreiben, und die Kupplung wieder geschlossen wird, wenn die Feder nicht mehr abgibt.

17. Federvorrichtung nach Anspruch 2, wobei die Energiefreisetzungssteuerkupplungsvorrichtung (104) derart installiert ist, dass der Verbraucher (105) unterschiedliche statische Reibungswerte und dynamische Reibungsfunktionen als einen Dämpfer aufweist; wobei das Zufuhrende der Feder (103) mit dem Ausgabeende der Akkumulationsübersetzung (102) gekoppelt ist, um Energie vom Zufuhrmechanismus (101) zu akkumulieren; das Ausgabeende der Feder den Verbraucher (105) antreibt; der Verbraucher eine größere statische Reibung als dynamische Reibung aufweist, um eine ähnliche Funktion bereitzustellen wie die Energiefreisetzungssteuerkupplungsvorrichtung (104), wodurch die Energiefreisetzungssteuerkupplung nicht verwendet werden kann; wobei, wenn das akkumulierte Drehmoment an der Feder (103) einen kritischen Wert statischer Reibung erreicht, der Verbraucher vom statischen Reibungsstatus zum dynamischen Reibungsstatus wechselt, um Antrieb bereitzustellen; die Feder kinetische Energie freisetzt, um den Verbraucher anzutreiben, bis die kinetische Energie der Feder mit dem dynamischen Reibungswert des Verbrauchers ausgeglichen ist, um den Verbraucher zum statischen Reibungswert zurückzubringen.

18. Federvorrichtung nach einem der Ansprüche 1 bis 17, wobei, wenn die Akkumulationsübersetzung (102) mit unumkehrbarer Übersetzung bereitgestellt ist, wie wenn eine unumkehrbare Übersetzungsschnecke und ein Schneckengetriebe bereitgestellt sind, wobei die Einwegübersetzung (107), die anderweitig zwischen dem Zufuhrende der Feder (103) und dem statischen Bauteil (106) des Gehäuses angeordnet ist, weggelassen werden kann.

19. Federvorrichtung nach einem der Ansprüche 1 bis 18, wobei die Akkumulationsübersetzung (102) eine variable Geschwindigkeit umfasst, abhängig vom Wert des Drehmoments, sodass, wenn der Akkumulationspegel geringer ist als die Feder (103), die Akkumulationsübersetzung die Feder mit geringerem Drehmoment und schnellerer Geschwindigkeit vom Zufuhrmechanismus (101) aufzieht, und die Feder später mit größerem Drehmoment und langsamerer Geschwindigkeit vom Zufuhrmechanismus aufzieht wenn sich das Geschwindigkeitsvariablenverhältnis ändert, wenn die Akkumulation der Feder zunimmt.

20. Federvorrichtung nach einem der Ansprüche 1 bis 19, ferner umfassend eine verlangsamende Art der Zufuhrenergiespeicherübersetzung (102), die bereitgestellt ist, um bei der Zufuhr geringer Mengen kinetischer Energie zu helfen, die in der Lage ist, die die Feder (103) durch Akkumulation antreiben können.

21. Federvorrichtung nach Anspruch 12, ferner umfassend eine beschleunigende Art der Ausgabeübersetzung (102'), die bereitgestellt ist, um die Drehzahl des Generators, der Pumpe, des Ventilators oder eines anderen Verbrauchers im Laufe des Ausgabebetriebs zu beschleunigen.

22. Federvorrichtung nach einem der Ansprüche 1 bis 19, ferner umfassend eine verlangsamende Art der Ausgabeübersetzung (102'), die bereitgestellt ist, um Ausgabe mit größerem Drehmoment und langsamer Drehzahl zu erzeugen, um einen Verbraucher anzutreiben.

23. Federvorrichtung nach Anspruch 12, ferner umfassend eine verlangsamende Art einer Zufuhrenergiespeicherübersetzung (102) und eine beschleunigende Art einer Ausgabeübersetzung (102'), um bei der Zufuhr geringer Mengen kinetischer Energie zu helfen, die die Feder (103) durch Akkumulation antreiben können bzw. um die Drehzahl des Generators, der Pumpe, des Ventilators oder anderen Verbrauchers im Laufe des Ausgabevorgangs zu beschleunigen.

24. Federvorrichtung nach einem der Ansprüche 1 bis 19, ferner umfassend eine verlangsamende Art der Zufuhrenergiespeicherübersetzung (102) und eine beschleunigende Art der Ausgabeübersetzung (102'), um bei der Zufuhr geringer Mengen kinetischer Energie zum Antreiben der Feder (103) durch Akkumulation zu helfen bzw. um eine Ausgabe mit größerem Drehmoment und langsamerer Drehzahl zu erzeugen, um einen Verbraucher anzutreiben.

## Revendications

1. Dispositif à ressort contenant un accumulateur intermittent et un déclenchement à libération d'énergie cinétique qui s'enroule progressivement pour accumuler de l'énergie, comprenant : un mécanisme d'entrée d'énergie cinétique (101) servant à faire entrer de l'énergie cinétique ; **caractérisé en ce que** le dispositif comprend en outre :
une transmission de sortie (102') servant à entraîner une charge (105) ; un ressort (103) servant à accumuler l'entrée d'énergie cinétique par le mécanisme d'entrée ; un dispositif d'embrayage de régulation de la libération d'énergie (104) servant à libérer l'énergie cinétique accumulée du ressort à la charge une fois que l'énergie cinétique accumulée atteint une valeur prédéfinie ; et une transmission à sens unique (107) positionnée entre le mécanisme d'entrée et le ressort.

2. Dispositif à ressort selon la revendication 1, comprenant en outre un dispositif de transmission d'accumulation d'énergie (102) servant à transmettre de l'énergie cinétique du mécanisme d'entrée (101) au ressort (103).

3. Dispositif à ressort selon la revendication 2, dans lequel le dispositif de transmission d'accumulation d'énergie (102) est un dispositif servant à procurer de l'accélération, de la décélération, une vitesse uniforme ou un mouvement changeant pour la circulation ou pour la transmission linéaire.

4. Dispositif à ressort selon la revendication 3, dans lequel le dispositif de transmission (102) est un ensemble de roues dentées de transmission ou un système de roues dentées ou des liaisons, pour une transmission de l'énergie cinétique du mécanisme d'entrée (101) pour entraîner le ressort (103).

5. Dispositif à ressort selon l'une quelconque des revendications 1 à 4, dans lequel le mécanisme d'entrée 101 contient un arbre de roulement, une roue de rouleau ou une poignée ou tout autre dispositif susceptible de permettre un entraînement en rotation, un entraînement de va-et-vient, un basculement ou une vibration soumise à un entraînement par une force manuelle, mécanique, électromagnétique, de moteur électrique ou par une source d'énergie cinétique aléatoire, ou soumise à un entraînement à sens unique ou à double sens par une force naturelle pour produire une énergie cinétique d'entraînement à déplacement à sens unique.

6. Dispositif à ressort selon l'une quelconque des revendications 1 à 5, dans lequel la transmission de sortie (102') est une transmission rotative ou linéaire pour un mouvement d'accélération, de décélération, à vitesse constante ou variable.

7. Dispositif à ressort selon la revendication 6, dans lequel la transmission de sortie (102') est un ensemble de roues dentées de transmission, un système à chaîne ou une liaison servant à transmettre l'énergie cinétique appliquée au ressort (103) pour entraîner une charge (105).

8. Dispositif à ressort selon l'une quelconque des revendications 1 à 7, dans lequel le ressort (103) permet d'accumuler de l'énergie cinétique à partir du mécanisme d'entrée (101) et contient un vortex, une spirale, une feuille ou toute autre forme de dispositif à ressort qui permet l'accumulation d'énergie cinétique.

9. Dispositif à ressort selon l'une quelconque des revendications 1 à 8, dans lequel le dispositif d'embrayage de régulation de la libération d'énergie (104) est un embrayage mécanique dont la fonction d'actionnement de limite de couple est fixée, préétablie ou ajustable ; ou un embrayage à friction doté d'une valeur de frottement statique supérieure à une valeur de frottement dynamique, ou un embrayage à valeur limitée de couple régulée par une force électromagnétique ou fluide.

10. Dispositif à ressort selon l'une quelconque des revendications 1 à 8, dans lequel le dispositif d'embrayage de régulation de la libération d'énergie (104) est une pièce mobile formant une structure fonctionnelle permettant de stocker et de libérer de l'énergie, et une pièce statique (106) formant une structure servant à interagir avec la structure ou avec la pièce mobile.

11. Dispositif à ressort selon la revendication 10, comprenant en outre un carter pour que la pièce statique facilite la fixation.

12. Dispositif à ressort selon l'une quelconque des revendications 1 à 11, dans lequel la charge (105) est une charge rotative ou linéaire entraînée par le ressort (103), et en particulier une charge servant à entraîner directement une pompe, ou pour entraîner une pompe par l'intermédiaire de la transmission de sortie (102'), pour pomper un liquide de travail, pour entraîner un ventilateur ou pour entraîner une autre charge mécanique ; ou par entraînement direct d'un générateur, ou entraînement d'un générateur par le biais de la transmission de sortie (102') ; ou grâce à l'énergie électrique issue du générateur pour entraîner directement une charge, ou pour charger une dispositif rechargeable, auquel cas l'énergie électrique issue du dispositif rechargeable est fournie à une montre bracelet ou à une montre de poche pour entraîner un mouvement de quartz ou tout autre mouvement entraîné par l'énergie électrique, ou l'énergie électrique est fournie à une charge comprenant un dispositif de télécommunication portatif, un enregistreur/lecteur vidéo, un enregistreur/lecteur AV d'informations, une caméra, un enregistreur de caméra/vidéo ou un dispositif d'émission lumineuse.

13. Dispositif à ressort selon la revendication 10, dans lequel la transmission à sens unique (107) est une roue dentée à cliquet et une structure de roue à cliquet servant à s'engager dans un entraînement à sens unique ou dans une autre transmission à sens unique ; et est disposé entre l'extrémité d'entrée du ressort (103) et la partie statique (106) du carter ; l'extrémité d'entrée du ressort étant dans une pièce mécanique de circulation disposée entre le mécanisme d'entrée (101) par le dispositif de transmission (102) d'accumulation, et l'extrémité d'entrée du ressort (103).

14. Dispositif à ressort selon la revendication 10, dans lequel le dispositif d'embrayage de régulation de la libération d'énergie (104) est installé de manière que ses extrémités d'interaction soient liées à l'extrémité de sortie du ressort (103) et couplées à l'extrémité d'entrée de la charge (105) par la transmission de sortie (102') et l'autre extrémité est liée à la partie statique (106) du carter ; moyennant quoi, quand la force élastique du ressort atteint une valeur critique, le dispositif d'embrayage à régulation de libération d'énergie est libéré par la transmission de sortie (102') pour transmettre l'énergie accumulée par le ressort pour entraîner la charge, et le dispositif d'embrayage à régulation de libération d'énergie est refermé quand le ressort cesse la transmission.

15. Dispositif à ressort selon la revendication 10, dans lequel le dispositif d'embrayage de régulation de la libération d'énergie (104) est installé de manière que les deux extrémités d'interaction soient disposées entre la charge (105) et la partie statique (106) du carter; moyennant quoi, quand la force élastique du ressort (103) atteint sa valeur critique, le dispositif d'embrayage de régulation de libération d'énergie est libéré pour transmettre l'énergie accumulée pour que le ressort entraîne la charge, et le dispositif d'embrayage de régulation de la libération d'énergie est refermé quand le ressort cesse sa transmission.

16. Dispositif à ressort selon la revendication 10, dans lequel le dispositif d'embrayage de régulation de la libération d'énergie (104) est installé de manière qu'une extrémité d'interaction du dispositif d'embrayage soit couplée à une structure de couplage de la pièce motrice de la charge (105) et en outre au ressort (103) par la transmission de sortie (102') tandis que l'autre extrémité est associée à la partie statique (106) du carter; moyennant quoi, quand la force élastique du ressort (103) atteint sa valeur critique, le dispositif d'embrayage de régulation de la libération d'énergie est libéré pour transmettre l'énergie accumulée du ressort pour entraîner la charge, et l'embrayage est refermé quand le ressort cesse de transmettre.

17. Dispositif à ressort selon la revendication 2, dans lequel le dispositif d'embrayage de régulation de la libération d'énergie (104) est installé dans la démarche suivante, de manière à ce que la charge (105) présente différentes valeurs de frottement statique, et que le frottement dynamique fonctionne comme un amortisseur; l'extrémité d'entrée du ressort (103) est couplée à l'extrémité de sortie de la transmission d'accumulation (102) pour accumuler de l'énergie depuis le mécanisme d'entrée (101) ; l'extrémité de sortie du ressort entraîne la charge (105) ; la charge a un frottement statique supérieur au frottement dynamique pour procurer une fonction aussi similaire que le dispositif d'embrayage de régulation de la libération d'énergie (104), moyennant quoi l'embrayage de régulation de la libération d'énergie peut ne pas être employé ; moyennant quoi quand le couple accumulé au niveau du ressort (103) atteint une valeur critique de frottement statique, la charge passe du statut de frottement statique au statut de frottement dynamique pour produire un entraînement ; l'énergie cinétique de libération du ressort pour entraîner la charge jusqu'à ce que l'énergie cinétique du ressort soit équilibrée par la valeur de frottement dynamique de la charge pour faire revenir la charge au statut de frottement statique.

18. Dispositif à ressort selon l'une quelconque des revendications 1 à 17, dans lequel si la transmission d'accumulation (102) est dotée d'une transmission irréversible de sorte qu'un filet de transmission irréversible et un ensemble de roues dentées à filet est prévu, la transmission à sens unique (107) autrement disposée entre l'extrémité d'entrée du ressort (103) et la partie statique (106) du carter peut être omise.

19. Dispositif à ressort selon l'une quelconque des revendications 1 à 18, dans lequel la transmission d'accumulation (102) comprend une transmission ayant une vitesse variable en fonction de la valeur du couple pour que, quand le niveau d'accumulation est inférieur au ressort (103), la transmission d'accumulation embobine le ressort avec un couple moindre et avec une vitesse plus grande depuis le mécanisme d'entrée (101), puis enroule le ressort à un couple supérieur et à une vitesse moindre depuis le mécanisme d'entrée quand le rapport variable de vitesse change avec l'augmentation de l'accumulation du ressort.

20. Dispositif à ressort selon l'une quelconque des revendications 1 à 19, comprenant en outre un type de décélération de transmission de stockage d'énergie d'entrée (102) disposé pour favoriser l'apport de plus petites quantités d'énergie cinétique qui sont à même d'entraîner le ressort (103) par accumulation.

21. Dispositif à ressort selon la revendication 12, comprenant en outre un type d'accélération de transmission de sortie (102') disposé pour accélérer la vitesse de rotation du générateur, de la pompe, du ventilateur ou d'une autre charge au cours d'une opération de transmission.

22. Dispositif à ressort selon l'une quelconque des revendications 1 à 19, comprenant en outre un type de décélération de transmission de sortie (102') conçu pour produire une sortie avec grand couple et vitesse de rotation lente pour entraîner une charge.

23. Dispositif à ressort selon la revendication 12, comprenant en outre un type de décélération de transmission de stockage d'entrée (102) et un type d'accélération de transmission de sortie (102') permettant de favoriser l'entrée de petites quantités d'énergie cinétique qui sont à même d'entraîner le ressort (103) par accumulation et pour accroître la vitesse de rotation du générateur, de la pompe, du ventilateur ou d'une autre charge au cours de l'opération de transmission, respectivement.

24. Dispositif à ressort selon l'une quelconque des revendications 1 à 19, comprenant en outre un type de décélération de transmission de stockage d'énergie d'entrée (102) et un type d'accélération de transmission de sortie (102') favorisant l'entrée de petites quantités d'énergie cinétique permettant d'entraîner le ressort (103) par accumulation et pour produire une sortie à plus grand couple et vitesse de rotation réduite pour entraîner une charge, respectivement.
